# EUROPEAN PATENT SPECIFICATION

(11) **EP 3 313 111 B1**
(45) Date of publication and mention of the grant of the patent: **20.11.2019**
(21) Application number: 16195098.5
(22) Date of filing: 21.10.2016
(51) Int. Cl.: H04W 12/06, H04W 4/00, H04W 12/00, H04W 4/50, H04W 60/00

(54) **COMMUNICATION NETWORK INITIATED OPERATOR DOMAIN SUBSCRIPTION SWITCHING**
KOMMUNIKATIONSNETZWERKINITIIERTER BETREIBERDOMÄNENABONNEMENTUMSCHALTUNG
CHANGEMENT DE SOUSCRIPTION DE DOMAINE D'OPÉRATEUR INITIÉ PAR UN RÉSEAU DE COMMUNICATION

(43) Date of publication of application: 25.04.2018
(73) Proprietor: Swisscom AG, 3050 Bern (CH)
(72) Inventor: Jost, Frank-Peter, 3052 Zollikofen (CH); Wagner, Christof, 3072 Ostermundigen (CH)
(74) Representative: Vesterinen, Jussi Tapio

(56) References cited:
- EP-A1- 2 448 301
- EP-A2- 3 073 773
- US-A1- 2013 023 235
- US-A1- 2013 165 073

## Description

### TECHNICAL FIELD

The present invention relates to a method of switching operator domain subscriptions in a communication network. More specifically, the invention relates to a communication network initiated method of switching between different user subscriptions. The invention also relates to a communication terminal for carrying out the method.

### BACKGROUND OF THE INVENTION

Mobile phones or terminals (sometimes also referred to as user equipment (UE)) supporting, amongst others, 3rd (3G) generation partnership project (3GPP) compliant access technologies can access a single radio access network (RAN), network and service domain at a time. Accessing several domains simultaneously would require several modems and universal integrated circuit cards (UICCs). The UICC identifies the user of a mobile terminal to a wireless network operator so that the operator knows the user's plan and services. The UICC can store the user's contacts, and enables a secure and reliable voice and multimedia data connection, and global roaming. The UICC is the universal application delivery platform that works with any 3G or 4G device. Technically, the UICC is a smart card and works in all mobile telecommunication networks. The UICC comprises a computer, or microprocessor, its own data storage and software. It is an evolution of the subscriber identity module (SIM) used to identify subscribers in global system for mobile communications (GSM) networks.

A major advantage of the UICC over the SIM is the fact that it can have multiple applications on it. One of these, the universal subscriber identity module (USIM) application, is what identifies the user to the wireless service provider using for example one of the following standards: universal mobile telecommunications system (UMTS), high speed packet access (HSPA) or long term evolution (LTE). Other possible applications include internet protocol (IP) multimedia services identity module (ISIM), to secure mobile access to multimedia services, and non-telecom applications such as payment applications. For example, many subscribers may have a UICC with USIM and ISIM applications for phone service and multimedia respectively. A further advancement is that the UICC can communicate using IP, the same standard used in the internet and the new generation of wireless networks.

Currently dual SIM user terminals exist comprising two SIM cards. Devices that use more than two SIM cards have also been developed and released, notably triple SIM terminals, and even handsets that can run on four SIMs. Shortcomings and disadvantages of these multi-SIM approaches are the following:
- Switching between operator domains (mostly used for price sensitive cases to avoid international roaming charges) has to be initiated by the user via a user interface of the user terminal.
- The user terminal needs to be equipped with two or more SIM hardware slots.
- The multi-SIM approaches do not support any kind of network initiated operator domain switching.
- The multi-SIM approaches are limited to only very few selections of pre-specified networks/operators.

US2013/0023235 A1 discloses a method which relates to provisioning an UICC with multiple services. The UICC enables a wireless communication device to communicate through multiple carriers by using a unique virtual SIM to register with each carrier. The unique virtual SIM is one of a plurality of virtual SIMs stored on and managed by the UICC. A carrier network includes a server for provisioning a new virtual SIM on a UICC over-the-air (OTA) when a new customer requests a service such as voice, data, or other type of service. These UICCs may also include logic to automatically select the best carrier for a voice call depending on the user settings.

EP2 448 301 A1 relates to a method that allows a device to migrate wireless service across multiple wireless networks. In one exemplary embodiment, the method enables storing and switching between multiple electronic SIMs (eSIMs), where each eSIM is specific to a different carrier network. By loading the appropriate eSIM, the user device can authenticate itself with the selected carrier, rather than roaming. During roaming operation, the user equipment can load one or more of the previously stored eSIMs. Selection of the eSIM can be done manually by the user or can be driven by the user equipment based on desired context; for example, based on carrier signal strength, cost-effectiveness, etc.

US2013/0165073 A1 relates to a method for emulating a plurality of subscriptions. In an embodiment, multiple virtual UICCs may be configured as independent UICCs and they may be hosted by a eUICC. In particular, the method is configured to enable two or more subscriptions (eg profiles), implemented on two or more vUICCs, that are configured to emulate multiple active network subscriptions that result in at least a dual SIM environment.

EP 3 073 773 A2 discloses a method for performing a remote management of a multi-subscription SIM module. The multi-subscription SIM module comprises at least one memory adapted to store a first and a second profile associated with a respective first and a second mobile network operator, such that a respective content may be associated with each profile.

### SUMMARY OF THE INVENTION

It is an object of the present invention to overcome at least some of the problems identified above relating to switching operator domain user subscriptions in communication networks.

According to a first aspect of the invention, there is provided a communication network initiated method for commanding a communication terminal to switch from a first operator domain subscription to a second operator domain subscription as recited in claim 1.

The proposed new solution has the advantage that the switching can be automatically initiated by the communication network once a given criterion is met. Thus, the communication terminal can simply follow the instructions received from the communication network. The proposed solution also increases public safety, because thanks to the invention, it is extremely unlikely that the communication terminal would find itself in a situation where it cannot connect to any operator domain.

According to a second aspect of the invention, there is provided a computer program product arranged to execute the method according to the first aspect of the present invention.

According to a third aspect of the invention, there is provided a network processing unit arranged to carry out the method according to the first aspect of the present invention.

Other aspects of the invention are recited in the dependent claims attached hereto.

### BRIEF DESCRIPTION OF THE DRAWINGS

Other features and advantages of the invention will become apparent from the following description of a non-limiting example embodiment, with reference to the appended drawings, in which:
- Figure 1 is a block diagram illustrating some elements of a communication network according to an example of the present invention;
- Figure 2 is a flow chart summarising the operator domain subscription switching procedure according to a first example of the present invention;
- Figure 3 is a flow chart summarising the operator domain subscription switching procedure according to a second example of the present invention;
- Figure 4 is a flow chart summarising the operator domain subscription switching procedure according to a third example of the present invention; and
- Figures 5a and 5b are a flow chart summarising the operator domain subscription switching procedure according to a fourth example of the present invention.

### DETAILED DESCRIPTION OF AN EMBODIMENT OF THE INVENTION

An embodiment of the present invention will now be described in detail with reference to the attached figures. This non-limiting embodiment is described in the context of a wireless cellular communication network. However, the teachings of the present invention are not limited to this environment and could be used in a wired communication network instead. Identical or corresponding functional and structural elements which appear in the different drawings are assigned the same reference numerals.

The embodiment described in more detail below is based on a multiple USIM/ISIM configuration on a single UICC or embedded SIM (eSIM) structure. Unlike a traditional SIM card, which is pre-provisioned with an operator profile, eSIMs are reprogrammable. The profile of a chosen operator can be installed, activated or changed via an encrypted communication over a mobile or fixed network. According to the present invention, it is possible to implement multiple and independent USIMs/ISIMs, ie from USIM/ISIM 1 to USIM/ISIM n, with a single UICC or eSIM. Controlled by a UICC algorithm preferably communicating with all the configured USIM/ISIMs, a domain controlling unit, referred to as a network algorithm or first algorithm, which in the described embodiment is on the network domain side, will be able to activate an appropriate USIM/ISIM (and deactivate another USIMs/ISIMs) according to various use cases or scenarios, remotely or via a controlling application (app) installed on the communication terminal.

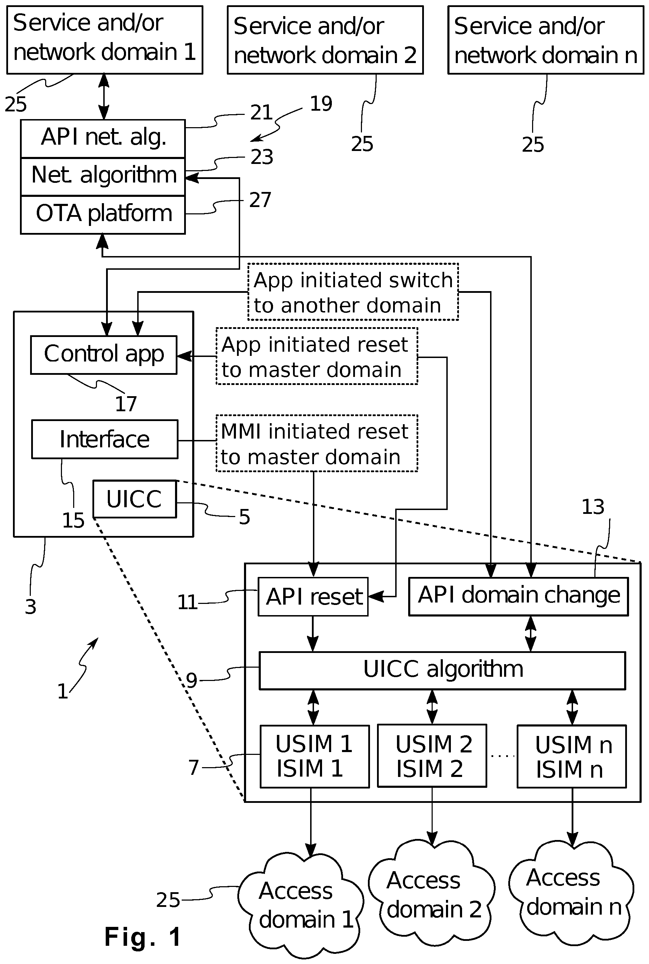

The block diagram of Figure 1 illustrates a wireless communication network 1 in a simplified manner. Only the elements which are useful for understanding the teachings of the present invention are shown. A wireless communication device 3, which in this example is a mobile phone or terminal (also known as a UE) comprises a single subscriber identity unit 5 (ie only one subscriber identity unit 5 and only one hardware slot for it), which in this example is a UICC. Thus, the mobile phone 3 supports multiple subscriber identities. In the present description, by the subscriber identity unit is understood any kind of subscriber identity module or card (or subscriber identified for short) which somehow identifies the user of the mobile phone and which can have various subscriber identity applications on it. The subscriber identity unit may comprise security credentials and/or one or more subscriber keys. Thus, the subscriber identity unit covers UICCs and eSIMs for example. As can be seen, the UICC 5 comprises multiple USIM and ISIM applications 7 defining (eg by the security credentials and/or subscriber identity information) a user subscription to a specific operator domain of the communication network. In other words, the subscription information is saved on the USIM and/or ISIM. In this example, for every USIM, there is a corresponding ISIM so that they can be considered as a USIM/ISIM pair enabling communications with a specific operator domain. However, instead of having various USIM/ISIM pairs on the UICC, there could be merely USIMs or ISIMs or another kind of combination of them. In this illustrated example there are n number of USIMs/ISIMs 7. It is to be noted that the mobile phone 3 is configured to use only one USIM/ISIM pair at a time.

The operation of the USIMs/ISIMs can be controlled by a second algorithm 9, referred to here as a UICC algorithm. More specifically, the UICC algorithm is configured to activate/deactivate and optionally reboot or reset the USIMs/ISIMs according to instructions received from a first application programming interface (API) 11, referred to here as an API reset, and/or a second application programming interface 13, referred to here as an API domain change, which in this example also comprises an API OTA SMS (API over-the-air programming short message service). The API reset 11 is configured to reset the UICC to operate in a master or default domain corresponding in this example to the USIM/ISIM 1. In other words, the API reset 11 is configured to select and activate the USIM/ISIM associated with the master domain, and deactivate the other USIM/ISIMs. In this example, the API reset 11 is not configured to activate other USIMs or ISIMs. The API reset 11 is configured to receive instructions from a terminal specific human interface 15, which is part of the mobile phone 3. The mobile phone 3 further comprises a control application 17, referred to as a control app, which is also configured to send instructions to the API reset unit 11. The control app 17 is also configured to bidirectionally communicate with the API domain change 13 as explained later in more detail.

On the communication network side, there is shown a network processing unit 19 (one per operator domain), which in this example comprises three elements as shown in Figure 1. A third API 21 is located between the network algorithm 23 and a service and/or network domain 25, which is the master domain (service and/or network domain 1). There is further shown an OTA platform 27 which is configured to bidirectionally communicate with the API OTA SMS of the API domain change 13. The security of the system can be improved, if only a registered and/or previously approved control app 17 and/or the OTA platform 27 is/are able to access the APIs of the UICC 9. Furthermore, if the APIs of the UICC 9 cannot provide feedback on the switching procedure, the control app 17 may be able to poll other APIs of the mobile phone 3 to access the information.

In the present description, the network side is understood to comprise all the elements of Figure 1 apart from the mobile phone 3 and the elements included therein. It is to be noted that in the embodiment described below, the network processing unit 19 is part of the master domain, controlled by the master domain and is arranged to send responses received from the UICC algorithm 9 (via its API 21) back to the master domain. The master domain has a comprehensive control over the mobile phone 3. Only the master domain (and more specifically its network processing unit 19) can decide to initiate the subscription switching procedure. To be able to decide to which subscription the mobile phone 3 should be switched, the network processing unit 19 preferably has knowledge about the network conditions (eg network congestion, malfunction etc) in all the operator domains of the communication network 1. The knowledge about the operational conditions in the different domains can be derived automatically (via eg obtaining the network status from the different domains) or by human intervention (eg after a catastrophic situation, such as earthquake, terror attack etc).

In the present description, the following terms can be described in the following manner:
- Access domain: this domain comprises the communication network (wireless and/or wired) access infrastructure (eg 2G, 3G, 4G RAN / cables and/or fibres) of a licensed network operator, such as Swisscom;
- Network domain: this domain comprises the core network (wireless and/or wired) infrastructure (eg IP multimedia subsystem (IMS), evolved packet core (EPC), user data management (UDM), mobile switching station (MSS)) of a licensed network operator;
- Service domain: this domain comprises the service network (wireless and/or wired) infrastructure (relating eg to voice over LTE (VoLTE), rich communication service (RCS), messaging, SMS, multimedia messaging service (MMS), data services) of a licensed network operator; and
- Operator domain: this domain is understood to cover the access domain, network domain and/or service domain.

Furthermore, a network operator, also known as a service provider or communication network carrier, is a provider of services that owns or controls all the elements necessary to sell and deliver services to an end user including eg radio spectrum allocation, wireless or wired infrastructure and/or core network infrastructure.

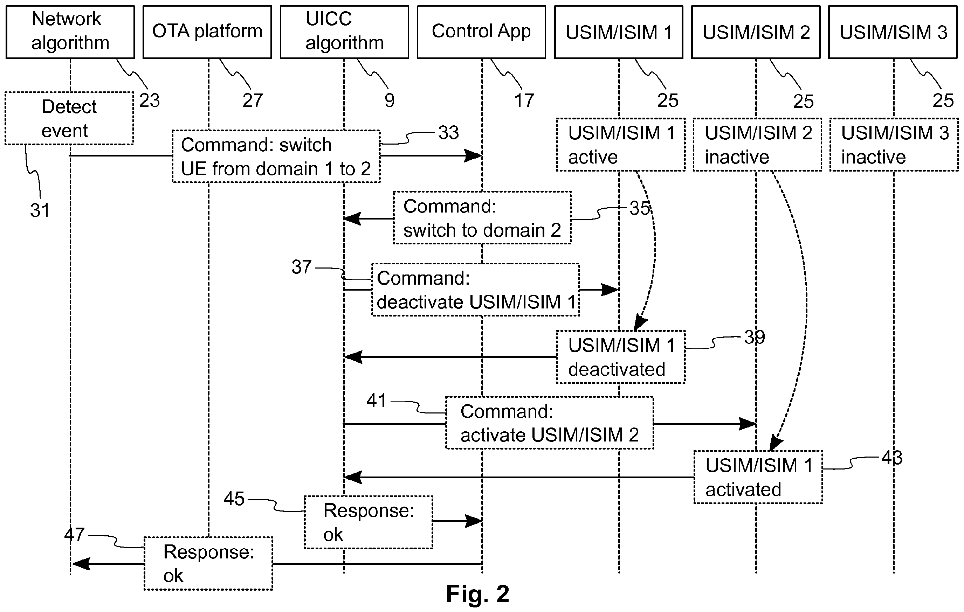

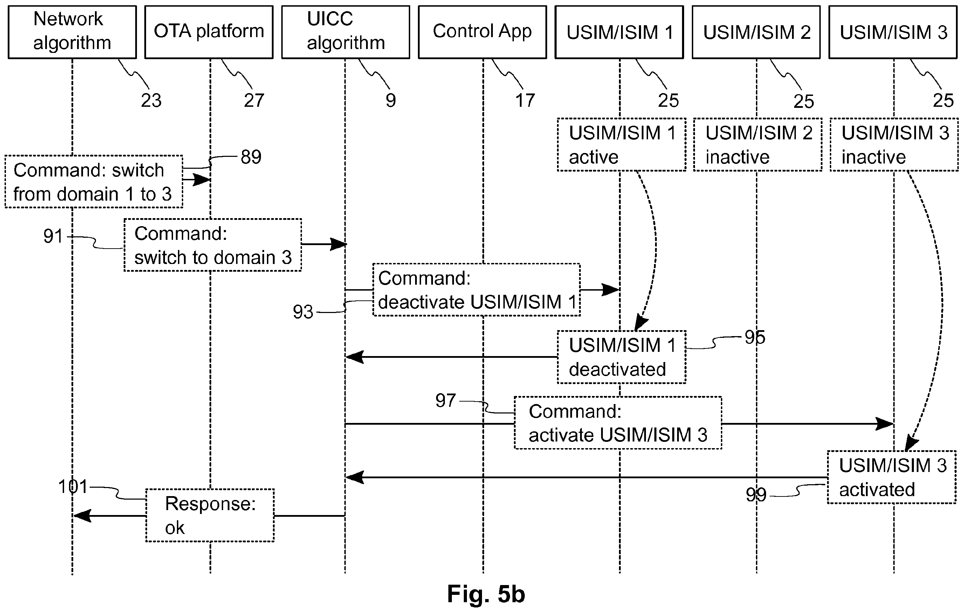

Next, with reference to the flow charts of Figures 2 to 5a and 5b, four example case scenarios are explained in more detail. In these scenarios, the user subscription switching is carried out between different operator domains. However, the operator switching procedure could be also performed within a single operator domain. This would be the case for example, if the network subscriber would switch from using its private USIM/ISIM to its company USIM/ISIM or vice versa.

In the example shown in Figure 1, an operator domain switching or handover (the word handover is used here in its broad sense) from the service and/or network domain 1 to the service and/or network domain 2 (through the access domain 2) is carried out by using the control app 17. In step 31, the processing unit 19 and more specifically the network algorithm 23 detects that a given switching condition or criterion is fulfilled or that a given event has taken place in the domain 1, which triggers the operator domain handover or switching procedure. The condition or event may be for example at least one of the following: network outage, network malfunction, network performance (degradation), network service break and network redundancy in another domain. The physical location of the mobile phone 3 could also be used for determining which subscription should be used next. This may be particularly advantageous if the user remains in the same operator domain after the switch. The physical location may be obtained from a satellite positioning system or from a cell identity of a cellular network, for instance. In this manner, a first subscription could be used when the terminal is within a given boundary (eg company premises or a campus) and a second subscription when outside of the boundary. A time aspect could be also used alone or in combination with the above events/criteria for determining which subscription should be used. For example, from Monday to Friday, the first subscription should be used while on Saturday and Sunday the second subscription should be used. Login information or status (eg to a company domain or to a specific information technology (IT) domain) may also be used alone or in combination with the above features for determining which subscription should be used.

Step 31 may also comprise determining to which operator domain the switching procedure should be performed. As explained earlier, the domain 1 is aware of the network operational conditions in the other domains and may even, based on this information, rank the domains in order of preference. In this example, it is determined that the domain 2 is the most suitable operator domain for the mobile phone 3 under the present circumstances. In step 33, the network algorithm 23 commands the control app 17 to move the communications of the mobile phone from the domain 1 to the domain 2. In step 35, the control app 17 commands the UICC algorithm 9 to switch from the domain 1 to the domain 2. In step 37, the UICC algorithm 9 deactivates the USIM/ISIM 1 and in step 39 it receives a confirmation from the USIM/ISIM 1 that the USIM/ISIM 1 is now inactive. In step 41, the UICC algorithm 9 activates the USIM/ISIM 2 and in step 43 it receives a confirmation from the USIM/ISIM 2 that the USIM/ISIM 2 is now active. It is to be noted that in the present description, the term activation refers to activation of the relevant USIM/ISIM (or any corresponding unit) and the following network attach procedure, while the term deactivation comprises the deactivation of the relevant USIM/ISIM and the following network detach procedure. In step 45, the UICC algorithm 9 informs the control app 17 that the switching procedure to the operator domain 2 was successful and in step 47, the control app 17 informs the network algorithm 23 that the switching procedure has been successful. It is to be noted that the activation and deactivation steps may be performed in a reverse order or substantially simultaneously and that the feedback information is optional (also in the following scenarios). Furthermore, according to the present invention, if the switching procedure fails for some reason, then the mobile phone 3 may be switched back to the master domain or it can be ordered to use its default subscription.

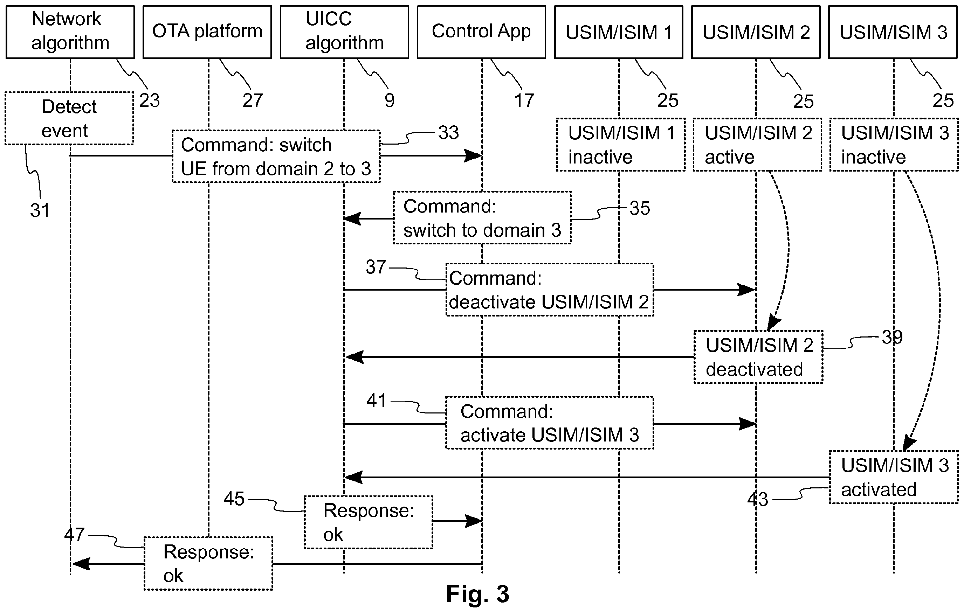

The flow chart of Figure 3 illustrates a scenario where an operator domain switching procedure from the service and/or network domain 2 to the service and/or network domain 3 (through the access domain 3) is carried out by using the control app 17. The process is substantially identical to the process illustrated in the flow chart of Figure 2 apart from the fact that now the switch is performed to the domain 3 as opposed to the domain 2 in the flow chart of Figure 2.

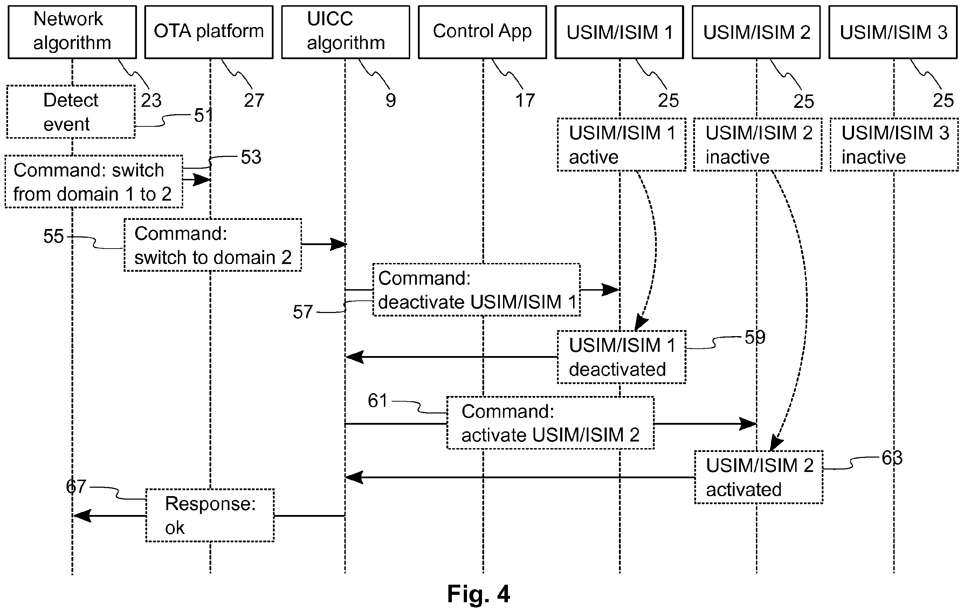

The flow chart of Figure 4 illustrates a scenario where an operator domain switching procedure from the service and/or network domain 1 to the service and/or network domain 2 (through the access domain 2) is carried out by using the OTA platform 27. The process is quite similar to the process illustrated in the flow chart of Figure 2 with the difference that the control app 17 is not involved in this scenario. In step 51, the processing unit 19 and more specifically the network algorithm 23 detects an event in the network (or that a switching criterion has been fulfilled), which triggers the switching procedure. This step also comprises determining to which operator domain the mobile phone should be switched. In this example, it is determined that the domain 2 is the most suitable operator domain for the mobile phone 3 under the present circumstances. In step 53, the network algorithm 23 commands the OTA platform 27 to execute the operator domain switching procedure from the domain 1 to the domain 2. In step 55, the OTA platform 27 commands the UICC algorithm 9 to switch the mobile phone 3 from the domain 1 to the domain 2. The remaining steps 57, 59, 61, 63 and 67 substantially correspond to the steps 37, 39, 41, 43 and 47 with the exception that in step 67, the response is directly sent from the UICC algorithm 9 to the network algorithm 23 or via the control app 17.

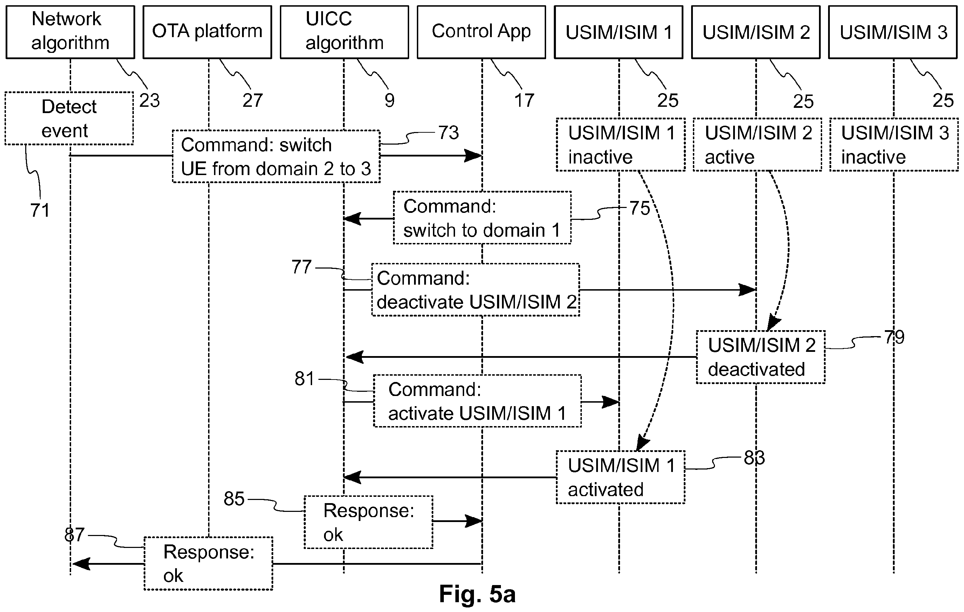

The flow chart of Figures 5a and 5b illustrates a scenario where an operator domain switching procedure from the service and/or network domain 2 to the service and/or network domain 3 (through the access domain 3) is carried out by using the OTA platform 27. In step 71, the processing unit 19 and more specifically the network algorithm 23 detects an event in the network (or that a switching criterion has been fulfilled), which triggers the operator domain switching procedure. The criterion or event may be at least one of the criteria and/or events explained above. This step also comprises determining to which operator domain the mobile phone 3 should be switched. In this example, it is determined that the domain 3 is the most suitable operator domain for the mobile phone 3 under the present circumstances. In step 73, the network algorithm 23 commands the control app 17 to execute the operator domain switching procedure from the domain 2 to the domain 3. It is to be noted that in this case, the OTA platform 27 cannot directly command the switch to the domain 3, because the over-the-air provisioning is only possible between an operator and subscriber identity modules belonging to it. The OTA mechanism enables the operator to provision/modify the network settings of a specific user terminal of its subscriber basis. Since the subscriber identity module credentials are directly linked to a specific operator, it is not possible for the operator to send OTA commands to subscriber identity modules which do not belong to it. To carry out the over-the-air provisioning, a set of short messages is typically sent to a specific terminal to (re)configure it.

In step 75, the control app 17 commands the UICC algorithm 9 to switch from the domain 2 to the domain 1. More specifically, in this case the control app 17 instructs the API reset 11 to switch the mobile phone 3 to the master domain (the domain 1). In step 77, the UICC algorithm 9 deactivates the USIM/ISIM 2 and in step 79 it receives a confirmation from the USIM/ISIM 2 that the USIM/ISIM 2 is now inactive. In step 81, the UICC algorithm 9 activates the USIM/ISIM 1 and in step 83 it receives a confirmation from the USIM/ISIM 1 that the USIM/ISIM 1 has been activated. In step 85, the UICC algorithm 9 informs the control app 17 that the switch to the operator domain 1 was successful and in step 87, the control app 17 informs the network algorithm 23 that the switch to the domain 1 was successful.

Now that the mobile phone 3 is in the domain 1, the OTA platform 27 can be used to execute the switching procedure to the domain 3. In step 89, the network algorithm 23 commands the OTA platform 27 to switch the mobile phone 3 to the domain 3. After this, in step 91, the OTA platform 27 instructs the UICC algorithm 9 via a short message to switch the mobile phone 3 to the domain 3. In step 93, the UICC algorithm 9 deactivates the USIM/ISIM 1 and receives, in step 95, a confirmation from the USIM/ISIM 1 that the USIM/ISIM 1 is now inactive. In step 97, the UICC algorithm 9 activates the USIM/ISIM 3 and receives, in step 99, a confirmation from the USIM/ISIM 3 that the USIM/ISIM 13 is now active. In step 101, the UICC algorithm confirms, via the OTA platform 27, to the network algorithm 23 that the switching procedure has been successfully completed to the domain 3.

Above, the teachings of the present invention were explained in the context of the UICC. However, the teachings of the present invention are likewise applicable to eSIMs, for example. In this case, the USIM/ISIM configurations could be deleted and/or installed remotely. Furthermore, the interface 15, or any other corresponding element, may be used by the user of the mobile phone 3 to force the mobile phone 3 to the master domain at any moment. In this case, the interface 15 would instruct the API reset 11 to switch the UICC/eSIM algorithm 9 to the master domain. More broadly, the UICC 9 may be configured to detect any domain or subscription switch request initiated by external systems and is configured to react as programmed. It is to be noted that the OTA platform 27 could be replaced by another communication platform to allow electronic communication between that communication platform and the API domain change 13. In a further variant of the present invention, the control app 17 may possess all or some of the functionalities of the network processing unit 19. In this special case, the mobile phone 3 would have at least some control over the domain switching. This way of operating would be enabled by the network processing unit 19 and could be used eg in some emergency situations. The user initiated switching may however need to be approved by the network processing unit 19. Furthermore, it is possible to carry out the switching process so that if the mobile phone 3 comprises the USIM/ISIM pair, then only one of these modules is switched to another domain (eg so that the USIM 1 and ISIM 2 are both active at the same time).

As explained above, the network algorithm 23 decides how to initiate the switching process and how to execute it. There are several ways to transfer the switching command from the network algorithm 23 to the UICC 9 depending for example on the domain and access technology, and the network algorithm 23 should be able to select the most suitable one. For instance, if the mobile phone 3 is currently connected to the master domain, then the OTA approach (via SMS) may be the preferred one. If the mobile phone 3 is connected to a secondary domain via LTE or via another IP network connection, then the existing IP connection by using the control app 17 may be used. If the mobile phone 3 is connected to a secondary domain or is roaming via 3G/2G network or via another non-IP network, then an IP connection could be initiated via a push SMS (and the switch could be carried out by using the control app 17). Alternatively, the control app 17 could regularly or not poll for any pending event (from the network algorithm 23).

Switching a USIM/ISIM includes the process of writing new the credentials and settings to a memory of the UICC 9 (referred to as a memory swap). However, such swapping has a negative impact on the UICC lifetime and should preferably be avoided. In a further variant of the present invention, not the entire USIM content is swapped but advantageously only the relevant parts. For instance, if the subscriptions are changed within the same operator, large portions of the data (eg the home public land mobile network (HPLMN)) are the same between these subscriptions.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A communication network initiated method for a network processing unit (19) commanding a communication terminal (3) in a communication network (1) to perform an operator domain subscription switching from a first operator domain subscription to a second operator domain subscription, different from the first operator domain subscription, the communication terminal (3) comprising a subscriber identity unit (5) comprising at least a first subscriber identity application (7) defining the first operator domain subscription for accessing a first operator domain (25), and a second subscriber identity application (7) defining the second operator domain subscription for accessing a second operator domain (25), the method comprising:
• the network processing unit (19) in the communication network (1) detecting (31) that at least one switch criterion has been fulfilled in the communication network (1);
• the network processing unit (19) ranking a multiplicity of operator domains of the communication network (1) in order of preference; and
• the network processing unit (19) sending (33) in response to the detected at least one switch criterion a command that is based on the ranking to the communication terminal (3) to switch the communication terminal (3) from using the first operator domain subscription to using the second operator domain subscription by deactivating the first subscriber identity application (7), and by activating (41) the second subscriber identity application (7) for communicating in the second operator domain (25) by using the second operator domain subscription.

2. The method according to claim 1, wherein the at least one switch criterion is at least one of the following: operator domain outage, operator domain malfunction, operator domain redundancy, operator domain service break, given physical location of the communication terminal and given time instant.

3. The method according to any one of the preceding claims, wherein the second operator domain (25) is different from the first operator domain (25).

4. The method according to any one of the preceding claims, wherein a control app (17) of the communication terminal (3) processes the request, and requests a processing algorithm (9) on the subscriber identity unit (5) to deactivate the first subscriber identity application (7), and to activate the second subscriber identity application (7).

5. The method according to claim 4, wherein the network processing unit (19) comprises an over-the-air programming platform (27), and wherein the method further comprises the network processing unit (19) requests the control app (17) to switch the communication terminal (3) back to using the first operator subscription, and wherein the over-the-air programming platform (27) sends a message to the processing algorithm (9) to deactivate the first subscriber identity application (7), and to activate a third subscriber identity application (7) of the subscriber identity unit (5) for communicating in a third operator domain (25).

6. The method according to any one of claims 1 to 4, wherein the network processing unit (19) comprises an over-the-air programming platform (27), and wherein the over-the-air programming platform (27) sends a message to a processing algorithm (9) on the subscriber identity unit (5) to deactivate the first subscriber identity application (7), and to activate the second subscriber identity application (7).

7. The method according to any one of the preceding claims, wherein the method further comprises the communication terminal (3) receiving through a user interface (15) a command from the user to switch the communication terminal (3) back to using the first operator domain subscription.

8. The method according to any one of the preceding claims, wherein the first operator domain (25) is a default operator domain of the communication terminal (3), and wherein the network processing unit (19) is located in the first operator domain (25).

9. The method according to any one of the preceding claims, wherein a control app (17) of the communication terminal (3) determines that the communication terminal (3) should be switched back to using the first domain subscription, and wherein the control app (17) requests a processing algorithm (9) on the subscriber identity unit (5) to deactivate the second subscriber identity application (7), and to activate the first subscriber identity application (7).

10. The method according to any one of the preceding claims, wherein the communication terminal (3) is a single subscriber identity unit communication terminal (3).

11. The method according to any one of the preceding claims, wherein the subscriber identity unit (5) is a universal integrated circuit card or an embedded subscriber identity module.

12. The method according to any one of the preceding claims, wherein the first subscriber identity application (7) comprises a first universal subscriber identity module and/or an internet protocol multimedia services identity module of the first operator domain (25), while the second subscriber identity application (7) comprises a second universal subscriber identity module and/or an internet protocol multimedia services identity module of the second operator domain (25).

13. A network processing unit (19) for commanding a communication terminal (3) in a communication network (1) to perform an operator domain subscription switching in the communication network (1) from a first operator domain subscription to a second operator domain subscription, different from the first operator domain subscription, the first operator domain subscription being defined by a first subscriber identity application (7) for accessing a first operator domain (25), and the second operator domain subscription being defined by a second subscriber identity application (7) for accessing a second operator domain (25), the network processing unit (19) comprising means for:
• detecting that at least one switch criterion has been fulfilled in the communication network (1);
• ranking a multiplicity of operator domains of the communication network (1) in order of preference; and
• sending in response to the detected at least one switch criterion a command that is based on the ranking to the communication terminal (3) to switch the communication terminal (3) from using the first operator domain subscription to using the second operator domain subscription by deactivating the first subscriber identity application (7), and by activating the second subscriber identity application (7) for communicating in the second operator domain (25) by using the second operator domain subscription.

## Patentansprüche

1. Durch ein Kommunikationsnetzwerk initiiertes Verfahren für eine Netzwerkverarbeitungseinheit (19), die einem Kommunikationsendgerät (3) in einem Kommunikationsnetzwerk (1) befiehlt, eine Umschaltung eines Betreiberdomänenabonnements von einem ersten Betreiberdomänenabonnement auf ein zweites Betreiberdomänenabonnement, das anders als das erste Betreiberdomänenabonnement ist, auszuführen, wobei das Kommunikationsendgerät (3) eine Abonnentenidentitätseinheit (5) umfasst, die mindestens eine erste Abonnentenidentitätsanwendung (7), die das erste Betreiberdomänenabonnement definiert, um auf eine erste Betreiberdomäne (25) zuzugreifen, und eine zweite Abonnentenidentitätsanwendung (7), die das zweite Betreiberdomänenabonnement definiert, um auf eine zweite Betreiberdomäne (25) zuzugreifen, umfasst, wobei das Verfahren Folgendes umfasst:
• Detektieren (31), durch die Netzwerkverarbeitungseinheit (19) in dem Kommunikationsnetzwerk (1), dass mindestens ein Umschaltkriterium in dem Kommunikationsnetzwerk (1) erfüllt wurde;
• Einordnen, durch die Netzwerkverarbeitungseinheit (19), einer Vielzahl von Betreiberdomänen des Kommunikationsnetzwerks (1) in bevorzugter Reihenfolge; und
• Senden (33), durch die Netzwerkverarbeitungseinheit (19), als Reaktion auf das detektierte mindestens eine Umschaltkriterium, eines auf der Rangordnung basierenden Befehls an das Kommunikationsendgerät (3), um das Kommunikationsendgerät (3) von der Verwendung des ersten Betreiberdomänenabonnements auf die Verwendung des zweiten Betreiberdomänenabonnements umzuschalten, indem die erste Abonnentenidentitätsanwendung (7) deaktiviert wird und die zweite Abonnentenidentitätsanwendung (7) aktiviert (41) wird, um in der zweiten Betreiberdomäne (25) unter Verwendung des zweiten Betreiberdomänenabonnements zu kommunizieren.

2. Verfahren nach Anspruch 1, wobei das mindestens eine Umschaltkriterium mindestens eines der folgenden ist: Ausfall der Betreiberdomäne, Fehlfunktion der Betreiberdomäne, Redundanz der Betreiberdomäne, Dienstunterbrechung der Betreiberdomäne, gegebener räumlicher Standort des Kommunikationsendgeräts und gegebener Zeitpunkt.

3. Verfahren nach einem der vorhergehenden Ansprüche, wobei die zweite Betreiberdomäne (25) anders als die erste Betreiberdomäne (25) ist.

4. Verfahren nach einem der vorhergehenden Ansprüche, wobei eine Steuer-App (17) des Kommunikationsendgeräts (3) die Anfrage verarbeitet und einen Verarbeitungsalgorithmus (9) auf der Abonnentenidentitätseinheit (5) auffordert, die erste Abonnentenidentitätsanwendung (7) zu deaktivieren und die zweite Abonnentenidentitätsanwendung (7) zu aktivieren.

5. Verfahren nach Anspruch 4, wobei die Netzwerkverarbeitungseinheit (19) eine drahtlose Programmierplattform (27) umfasst, und wobei das Verfahren ferner umfasst, dass die Netzwerkverarbeitungseinheit (19) die Steuer-App (17) auffordert, das Kommunikationsendgerät (3) auf die Verwendung des ersten Betreiberabonnements zurückzuschalten, und wobei die drahtlose Programmierplattform (27) eine Nachricht an den Verarbeitungsalgorithmus (9) sendet, um die erste Abonnentenidentitätsanwendung (7) zu deaktivieren und eine dritte Abonnentenidentitätsanwendung (7) der Abonnentenidentitätseinheit (5) zum Kommunizieren in einer dritten Betreiberdomäne (25) zu aktivieren.

6. Verfahren nach einem der Ansprüche 1 bis 4, wobei die Netzwerkverarbeitungseinheit (19) eine drahtlose Programmierplattform (27) umfasst, und wobei die drahtlose Programmierplattform (27) eine Nachricht an einen Verarbeitungsalgorithmus (9) auf der Abonnentenidentitätseinheit (5) sendet, um die erste Abonnentenidentitätsanwendung (7) zu deaktivieren und die zweite Abonnentenidentitätsanwendung (7) zu aktivieren.

7. Verfahren nach einem der vorhergehenden Ansprüche, wobei das Verfahren ferner umfasst, dass das Kommunikationsendgerät (3) über eine Benutzerschnittstelle (15) einen Befehl von dem Benutzer empfängt, um das Kommunikationsendgerät (3) auf die Verwendung des ersten Betreiberdomänenabonnements zurückzuschalten.

8. Verfahren nach einem der vorhergehenden Ansprüche, wobei die erste Betreiberdomäne (25) eine Standardbetreiberdomäne des Kommunikationsendgeräts (3) ist, und wobei sich die Netzwerkverarbeitungseinheit (19) in der ersten Betreiberdomäne (25) befindet.

9. Verfahren nach einem der vorhergehenden Ansprüche, wobei eine Steuer-App (17) des Kommunikationsendgeräts (3) bestimmt, dass das Kommunikationsendgerät (3) auf die Verwendung des ersten Domänenabonnements zurückgeschaltet werden soll, und wobei die Steuer-App (17) einen Verarbeitungsalgorithmus (9) auf der Abonnentenidentitätseinheit (5) auffordert, die zweite Abonnentenidentitätsanwendung (7) zu deaktivieren und die erste Abonnentenidentitätsanwendung (7) zu aktivieren.

10. Verfahren nach einem der vorhergehenden Ansprüche, wobei das Kommunikationsendgerät (3) ein einziges Kommunikationsendgerät (3) einer Abonnentenidentitätseinheit ist.

11. Verfahren nach einem der vorhergehenden Ansprüche, wobei die Abonnentenidentitätseinheit (5) eine universelle Chipkarte oder ein eingebettetes Abonnentenidentitätsmodul ist.

12. Verfahren nach einem der vorhergehenden Ansprüche, wobei die erste Abonnentenidentitätsanwendung (7) ein erstes universelles Abonnentenidentitätsmodul und/oder ein Identitätsmodul für Multimediadienste mit Internetprotokoll der ersten Betreiberdomäne (25) umfasst, während die zweite Abonnentenidentitätsanwendung (7) ein zweites universelles Abonnentenidentitätsmodul und/oder ein Identitätsmodul für Multimediadienste mit Internetprotokoll der zweiten Betreiberdomäne (25) umfasst.

13. Netzwerkverarbeitungseinheit (19), um einem Kommunikationsendgerät (3) in einem Kommunikationsnetzwerk (1) zu befehlen, eine Umschaltung eines Betreiberdomänenabonnements in dem Kommunikationsnetzwerk (1) von einem ersten Betreiberdomänenabonnement auf ein zweites Betreiberdomänenabonnement, das anders als das erste Betreiberdomänenabonnement ist, auszuführen, wobei das erste Betreiberdomänenabonnement durch eine erste Abonnentenidentitätsanwendung (7) zum Zugreifen auf eine erste Betreiberdomäne (25) definiert ist und das zweite Betreiberdomänenabonnement durch eine zweite Abonnentenidentitätsanwendung (7) zum Zugreifen auf eine zweite Betreiberdomäne (25) definiert ist, wobei die Netzwerkverarbeitungseinheit (19) Mittel umfasst zum:
• Detektieren, dass mindestens ein Umschaltkriterium in dem Kommunikationsnetzwerk (1) erfüllt wurde;
• Einordnen einer Vielzahl von Betreiberdomänen des Kommunikationsnetzwerks (1) in bevorzugter Reihenfolge; und
• Senden, als Reaktion auf das detektierte mindestens eine Umschaltkriterium, eines Befehls, der auf der Rangordnung basiert, an das Kommunikationsendgerät (3), um das Kommunikationsendgerät (3) von der Verwendung des ersten Betreiberdomänenabonnements auf die Verwendung des zweiten Betreiberdomänenabonnements umzuschalten, indem die erste Abonnentenidentitätsanwendung (7) deaktiviert wird und die zweite Abonnentenidentitätsanwendung (7) aktiviert wird, um in der zweiten Betreiberdomäne (25) unter Verwendung des zweiten Betreiberdomänenabonnements zu kommunizieren.

## Revendications

1. Un procédé initié par un réseau de communication pour une unité de traitement de réseau (19) pour commander un terminal de communication (3) dans un réseau de communication (1) pour exécuter un changement de souscription de domaine d'opérateur d'une première souscription de domaine d'opérateur à une deuxième souscription de domaine d'opérateur, différente de la première souscription de domaine d'opérateur, le terminal de communication (3) comprenant une unité d'identité d'abonné (5) comprenant au moins une première application d'identité d'abonné (7) définissant la première souscription de domaine d'opérateur pour accéder à un premier domaine d'opérateur (25), et une deuxième application d'identité d'abonné (7) définissant la deuxième souscription de domaine d'opérateur pour accéder à un deuxième domaine d'opérateur (25), le procédé comprenant les étapes suivantes :
• l'unité de traitement de réseau (19) dans le réseau de communication (1) détectant (31) qu'au moins un critère de changement a été rempli dans le réseau de communication (1) ;
• l'unité de traitement de réseau (19) classant une multiplicité de domaines d'opérateur du réseau de communication (1) par ordre de préférence ; et
• l'unité de traitement de réseau (19) envoyant (33), en réponse à au moins un critère de changement détecté, une commande, reposant sur le classement, au terminal de communication (3) de rediriger le terminal de communication (3) pour utiliser la deuxième souscription de domaine d'opérateur au lieu d'utiliser la première souscription de domaine d'opérateur en désactivant la première application d'identité d'abonné (7), et en activant (41) la deuxième application d'identité d'abonné (7) pour communiquer dans le deuxième domaine d'opérateur (25) en utilisant la deuxième souscription de domaine d'opérateur.

2. Le procédé selon la revendication 1, dans lequel au moins un critère de changement est au moins l'un des critères suivants : panne de domaine d'opérateur, dysfonctionnement de domaine d'opérateur, redondance de domaine d'opérateur, coupure de service de domaine d'opérateur, lieu physique donné du terminal de communication et instant donné.

3. Le procédé selon l'une quelconque des revendications précédentes, dans lequel le deuxième domaine d'opérateur (25) est différent du premier domaine d'opérateur (25).

4. Le procédé selon l'une quelconque des revendications précédentes, dans lequel une application de contrôle (17) du terminal de communication (3) traite la requête et demande à un algorithme de traitement (9) sur l'unité d'identité d'abonné (5) de désactiver la première application d'identité d'abonné (7), et d'activer la deuxième application d'identité d'abonné (7).

5. Le procédé selon la revendication 4, dans lequel l'unité de traitement de réseau (19) comprend une plateforme de programmation en direct (27), et dans lequel l'unité de traitement de réseau (19) demande à l'application de contrôle (17) de rediriger le terminal de communication (3) pour utiliser de nouveau la première souscription d'opérateur, et dans lequel la plateforme de programmation en direct (27) envoie un message à l'algorithme de traitement (9) pour désactiver la première application d'identité d'abonné (7), et pour activer une troisième application d'identité d'abonné (7) de l'unité d'identité d'abonné (5) pour communiquer dans un troisième domaine d'opérateur (25).

6. Le procédé selon l'une quelconque des revendications 1 à 4, dans lequel l'unité de traitement de réseau (19) comprend une plateforme de programmation en direct (27), et dans lequel la plateforme de programmation en direct (27) envoie un message à un algorithme de traitement (9) sur l'unité d'identité d'abonné (5) pour désactiver la première application d'identité d'abonné (7) et pour activer la deuxième application d'identité d'abonné (7).

7. Le procédé selon l'une quelconque des revendications précédentes, dans lequel le procédé comprend en outre le terminal de communication (3) recevant via une interface utilisateur (15) une commande en provenance de l'utilisateur pour rediriger de nouveau le terminal de communication (3) pour utiliser la première souscription de domaine d'opérateur.

8. Le procédé selon l'une quelconque des revendications précédentes, dans lequel le premier domaine d'opérateur (25) est un domaine d'opérateur par défaut du terminal de communication (3), et dans lequel l'unité de traitement de réseau (19) est située dans le premier domaine d'opérateur (25).

9. Le procédé selon l'une quelconque des revendications précédentes, dans lequel une application de contrôle (17) du terminal de communication (3) détermine que le terminal de communication (3) devrait être de nouveau redirigé pour utiliser la première souscription de domaine, et dans lequel l'application de contrôle (17) demande à un algorithme de traitement (9) sur l'unité d'identité d'abonné (5) de désactiver la deuxième application d'identité d'abonné (7) et d'activer la première application d'identité d'abonné (7).

10. Le procédé selon l'une quelconque des revendications précédentes, dans lequel le terminal de communication (3) est un terminal de communication (3) à unité d'identité d'abonné unique.

11. Le procédé selon l'une quelconque des revendications précédentes, dans lequel l'unité d'identité d'abonné (5) est une carte à circuit intégré universelle ou un module d'identité d'abonné intégré.

12. Le procédé selon l'une quelconque des revendications précédentes, dans lequel la première application d'identité d'abonné (7) comprend un premier module d'identité d'abonné universel et/ou un module d'identité de services multimédia de protocole Internet du premier domaine d'opérateur (25), tandis que la deuxième application d'identité d'abonné (7) comprend un deuxième module d'identité d'abonné universel et/ou un module d'identité de services multimédia de protocole Internet du deuxième domaine d'opérateur (25).

13. Une unité de traitement de réseau (19) pour donner l'ordre à un terminal de communication (3) dans un réseau de communication (1) d'exécuter un changement de souscription de domaine d'opérateur dans le réseau de communication (1), d'une première souscription de domaine d'opérateur à une deuxième souscription de domaine d'opérateur, différente de la première souscription de domaine d'opérateur, la première souscription de domaine d'opérateur étant définie par une première application d'identité d'abonné (7) pour accéder à un premier domaine d'opérateur (25), et la deuxième souscription de domaine d'opérateur étant définie par une deuxième application d'identité d'abonné (7) pour accéder à un deuxième domaine d'opérateur (25), l'unité de traitement de réseau (19) comprenant des moyens pour :
• détecter qu'au moins un critère de changement a été rempli dans le réseau de communication (1) ;
• classer une multiplicité de domaines d'opérateur du réseau de communication (1) par ordre de préférence ; et
• envoyer, en réponse à au moins un critère de changement détecté, une commande, reposant sur le classement, au terminal de communication (3) de rediriger le terminal de communication (3) pour utiliser la deuxième souscription de domaine d'opérateur au lieu d'utiliser la première souscription de domaine d'opérateur en désactivant la première application d'identité d'abonné (7), et en activant la deuxième application d'identité d'abonné (7) pour communiquer dans le deuxième domaine d'opérateur (25) en utilisant la deuxième souscription de domaine d'opérateur.
